(19) Europäisches Patentamt
European Patent Office
Office européen des brevets

(11) **EP 2 551 788 A1**

(12) **EUROPÄISCHE PATENTANMELDUNG**

(43) Veröffentlichungstag:
**30.01.2013 Patentblatt 2013/05**

(51) Int Cl.:
***G06K 9/00*** *(2006.01)*

(21) Anmeldenummer: **11175945.2**

(22) Anmeldetag: **29.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Fachhochschule St. Pölten GmbH 3100 St. Pölten (AT)**

(72) Erfinder:
• **Rybnicek, Marlies**
  **3100 St. Pölten (AT)**
• **Piller, Ernst**
  **3100 St. Pölten (AT)**

(74) Vertreter: **Müllner, Martin et al**
**Patentanwalt**
**Weihburggasse 9**
**Postfach 159**
**1014 Wien (AT)**

(54) **Verfahren zur biometrischen gesichtserkennung**

(57) Verfahren zur biometrischen Gesichtserkennung, wobei zunächst in einer Bildvorverarbeitung die Größe und die Position des Gesichts im Bild auf vorgegebene Werte gebracht werden; wonach mehrere Gabor-Filter angewendet werden, sodass eine entsprechende Zahl von Bildern entsteht; und wonach von diesen Bildern die "Local Binary Patterns" berechnet werden. Zur Durchführung einer wenig speicherplatz- und rechenzeitintensiven Gesichtserkennung werden die "Local Binary Patterns" durch Hauptkomponentenanalyse (Principal Components Analysis) komprimiert und die so komprimierten Daten mit zuvor in gleicher Weise gebildeten Daten eines Referenzbildes verglichen. Dieses Verfahren ist so effizient, dass der Vergleich innerhalb einer Chipkarte ("Matching on Chip") durchgeführt werden kann. Auch für die Ermittlung einer Person anhand eines Fotos und einer Fotokartei ist es aufgrund der hohen Geschwindigkeit bestens geeignet, auch bei extrem großen Fotokarteien.

Fig. 2

EP 2 551 788 A1

**Beschreibung**

**Technisches Gebiet**

Die vorliegende Erfindung betrifft ein Verfahren zur biometrischen Gesichtserkennung, wobei zunächst in einer Bildvorverarbeitung die Größe und die Position des Gesichts im Bild auf vorgegebene Werte gebracht werden; wonach mehrere Gabor-Filter angewendet werden, sodass eine entsprechende Zahl von Bildern entsteht; und wonach von diesen Bildern "Local Binary Patterns" berechnet werden.

**Stand der Technik**

Die Informationsgesellschaft lebt von unmanipulierten, authentischen und vertraulichen Daten. Chipkarten ermöglichen wie keine andere Technologie die Umsetzung dieser Anforderungen in Verbindung mit kryptografischen Verfahren und Passwörtern bzw. biometrischen Methoden zur Benutzerauthentifizierung. Praktische Beispiele dafür sind heute über zehn Milliarden SIM-Karten in Mobiltelefonen, Kreditkarten, Debitkarten, Sozialversicherungskarten und neue Reisepässe mit Chip. Auch für die Erstellung der digitalen Signatur und viele weitere Anwendungen werden Chipkarten verwendet. Die durchgeführte Benutzerauthentifizierung bei Chipkarten erfolgt heute meist mit Passwörtern (PIN-Codes). Entscheidend dabei ist, dass das Passwort (der PIN-Code) geheim bleibt, was so gelöst wird, dass das Passwort (der PIN-Code) auf der Karte nicht auslesbar gespeichert ist und das eingegebene Passwort (der eingegebene PIN-Code) zur Karte übertragen wird, wonach die Karte selbst den Vergleich zwischen eingegebenem Passwort (eingegebenem PIN-Code) und gespeichertem Passwort (gespeichertem PIN-Code) durchführt. Nach einigen Falscheingaben (z.B. nach drei oder zehn Falscheingaben) deaktiviert sich die Karte selbst. Somit ist eine verlorene Karte für den unredlichen Finder unbrauchbar.

In Zukunft werden dafür aus Sicherheitsgründen verstärkt biometrische Methoden zum Einsatz kommen. Auch bei diesen Methoden ist es günstig, wenn die Speicherung und Prüfung der biometrischen Daten direkt am Chip der Chipkarte erfolgt, wie dies bei PIN-Codes derzeit üblich ist. Das heißt, die biometrischen Daten des Benützers liegen geschützt und nicht auslesbar nur auf dem Chip seiner eigenen Chipkarte und befinden sich auf keiner zentralen Datenbank außerhalb der Benutzerkontrolle. Dieses so genannte "Matching on Chip"-Verfahren ist für den Fingerabdruck bereits seit einem Jahrzehnt gelöst.

In den letzten Jahren hat vor allem die Gesichtserkennung als biometrisches Merkmal im Umfeld von Chipkarten wie dem Reisepass und den ID-Karten stark an Bedeutung gewonnen, und dieser Trend wird sich durch die große Verfügbarkeit von Kameras in Mobiltelefonen, Bankomaten, Laptops etc. auch auf viele andere Bereiche ausdehnen. Für die Gesichtserkennung existieren heute aber noch kein für Chipkarten geeignete "Matching on Chip"-Lösungen. Problematisch sind der sehr kleine Hauptspeicher und die langsame CPU von Chipkarten.

Ein weiteres Anwendungsgebiet für Gesichtserkennung gibt es bei der Personenidentifizierung. So gibt es bei der Polizei manchmal ein Foto des Täters, allerdings ist die Identität der Person unbekannt. Es ist nun äußerst mühsam, das Foto des Täters mit den bereits erfassten Fotos zu vergleichen. Macht man dies mit Hilfe von EDV, ist bei den derzeitigen Verfahren die Rechenzeit extrem hoch, wenn mit vielen Fotos verglichen werden soll.

**Kurzbeschreibung der Erfindung**

Aufgabe der Erfindung ist es, ein praxistaugliches Verfahren zur Gesichtserkennung zu schaffen, das erheblich weniger Rechenzeit und Speicherplatz benötigt. Es soll insbesondere für das "Matching on Chip"-Verfahren für die derzeit üblichen standardisierten Chipkartenbetriebssysteme geeignet sein. Es soll also eine biometrische Authentifizierung durch Gesichtserkennung in Chips von Chipkarten im Masseneinsatz bei Einhaltung von üblichen Praxisanforderungen bei der Authentifizierungszeit, FAR (Akzeptanz Unberechtigter) und FRR (Rückweisungsrate Berechtigter) ermöglicht werden. Weiters soll es auch ermöglicht werden, eine Vielzahl von Referenzfotos in kurzer Zeit mit vorgegebenen Fotos zu vergleichen, um eine geringe Anzahl möglicher Identitäten zu finden.

Diese Aufgaben werden durch ein Verfahren der eingangs genannten Art erfindungsgemäß dadurch gelöst, dass zur Durchführung einer wenig speicherplatz- und rechenzeitintensiven Gesichtserkennung die "Local Binary Patterns" durch Hauptkomponentenanalyse (Principal Components Analysis) komprimiert werden und dass die so komprimierten Daten mit zuvor in gleicher Weise gebildeten Daten eines Referenzbildes oder mehrerer Referenzbilder verglichen werden.

Im Rahmen der vorliegenden Erfindung wurde nämlich völlig überraschend gefunden, dass Bilder, die zuvor mit Gabor-Filtern bearbeitet und von denen dann die "Local Binary Patterns" berechnet wurden, sich extrem stark mittels des "Principal Components Analysis"-Algorithmus komprimieren lassen, ohne dass viel Information verloren geht. So ist konkret eine Komprimierung um einen Faktor 400 mit nur geringem Informationsverlust gelungen.

Zur Gesichtserkennung innerhalb einer Chipkarte ist es zweckmäßig, wenn die nach der Verarbeitung des Referenzbildes oder der Referenzbilder entstandenen Daten einmalig auf der Chipkarte gespeichert werden und durch ein in der Chipkarte ablaufendes Programm mit den entsprechenden Daten des aktuell verarbeiteten Bildes verglichen werden. Damit ist ein Vergleich innerhalb von einer Sekunde möglich.

Dabei ist es im Sinne einer raschen Auswertung sinnvoll, wenn die Anwendung der Gabor-Filter und die Berechnung der "Local Binary Patterns" außerhalb der Chipkarte durchgeführt werden. Diese Verfahren sind rechenintensiv und speicherintensiv und würden auf der Chipkarte zu lange dauern und auch nur mit einem externen Speicher möglich sein.

Das erfindungsgemäße Verfahren ermöglicht durch seinen sehr schnellen und speichersparenden Mustervergleich auch eine sehr schnelle Personenidentifizierung mittels der Gesichtserkennung bei einer großen Auswahl an Personen.

Zur Identifizierung einer Person anhand eines Fotos der gesuchten Person und einer Fotokartei mit Fotos einer Vielzahl von Personen ist es daher zweckmäßig, wenn zunächst das oben genannte Verfahren mit der Hauptkomponentenanalyse angewendet wird, um all diejenigen Personen auszuwählen, die eventuell in Frage kommen, und wenn danach nur auf die ausgewählten Personen leistungsfähigere Verfahren angewendet werden. Auf diese Weise kann viel Rechenzeit eingespart werden. Wenn man z.B. mit dem oben genannten Verfahren 99% der Fotos ausschließen kann, dann wird die Rechenzeit der leistungsfähigeren Verfahren (mit denen eine höhere Erkennungssicherheit möglich ist) eben um 99% reduziert. Wenn das oben genannte Verfahren rund 100 Mal schneller ist, wird die Rechenzeit insgesamt um 98% reduziert.

Es ist zweckmäßig, wenn durch die Bildvorverarbeitung das Gesicht auf eine Größe von 100x100 Pixel gebracht wird. Diese Bildgröße ist noch ausreichend, um eine einigermaßen sichere Erkennung zu gewährleisten, und klein genug, um die entsprechenden Daten schnell verarbeiten zu können.

Weiters ist es zweckmäßig, wenn 80 Gabor-Filter angewendet werden. Auch dies ist ein Kompromiss zwischen Erkennungssicherheit und Schnelligkeit des Verfahrens.

Nach einer bevorzugten Ausführungsform der Erfindung werden die Bilder zur Berechnung der "Local Binary Patterns" in Teilbereiche unterteilt und werden die Daten als Histogramm für jeden Teilbereich gespeichert, wobei die einzelnen Teilbereiche unterschiedlich gewichtet werden, bevor die Hauptkomponentenanalyse ("Principal Component Analysis") angewendet wird. Durch entsprechende Gewichtung wichtiger Bereiche (Augen, Nase, ...) kann die Erkennungssicherheit erhöht werden.

Weiters ist es günstig, wenn zumindest ein Drittel der Bereiche mit Null gewichtet wird. Auf diese Weise werden sowohl Rechenzeit als auch Speicherplatz gespart, ohne die Erkennungsgenauigkeit zu reduzieren, weil insbesondere im Randbereich ohnehin kaum eine verwertbare Information vorliegt.

Schließlich ist es zweckmäßig, wenn die Matrix, die für die Hauptkomponentenanalyse (Principal Components Analysis) verwendet wird, für jeden Teilbereich unabhängig festgelegt ist. Dadurch ist es möglich, trotz hoher Kompression die meiste Information zu erhalten, viel mehr, als wenn für alle Teilbereiche einheitliche Eigenvektoren verwendet würden.

## Kurze Beschreibung der Zeichnungsfiguren

Die beiden Figuren zeigen jeweils ein Foto einer Person und die Unterteilung dieses Fotos in Teilbereiche.

## Beschreibung der Ausführungsarten

Die Erfindung wird nun anhand eines konkreten Beispiels genau beschrieben.

In diesem Beispiel des erfindungsgemäßen Verfahrens werden Graustufenbilder von Gesichtern der Größe 100x100 Pixel verwendet. Solch ein Bild lässt sich also durch 10.000 Zahlen beschreiben.

Auf ein Gesichtsbild werden zunächst zweidimensionale Gabor-Filter mit den Parametern Orientierung $\theta$, Frequenz $\lambda$, Phase $\varphi$, Größe $\sigma$ und Seitenverhältnis $\gamma$ angewandt, um Details und Kanten zu detektieren.

Die Gabor-Filter werden wie folgt berechnet:

$$W(x, y, \theta, \lambda, \varphi, \sigma, \gamma) = e^{\frac{-x'^2 + \gamma^2 y'^2}{2\sigma^2}} \cos\left(2\pi \frac{x'}{\lambda} + \varphi\right)$$

$$x' = x \cos\theta + y \sin\theta$$

3

$$y' = -x \sin\theta + y \cos\theta$$

Die Variablen x und y beziehen sich auf die Position des Wertes im Filter. Man erhält insgesamt 80 Gabor-Filter, wenn man die Werte gemäß folgender Tabelle wählt:

**Tabelle 1**

| Parameter | Wert |
|---|---|
| θ | 0; $\pi/8$; $2\pi/8$; $3\pi/8$; $4\pi/8$; $5\pi/8$; $6\pi/8$; $7\pi/8$ |
| λ | 4; $4\cdot\sqrt{2}$; 8; $8\cdot\sqrt{2}$; 16 |
| φ | $-\pi/4$; $\pi/4$ |
| σ | $3\pi/4$ |
| γ | 1 |

Wendet man diese Filter auf ein Gesichtsbild an, ergeben sich daraus 80 resultierende Bilder (Amplitude und Phaseninformationen des Ursprungsbildes). Die Datenmenge wird also in diesem ersten Schritt um einen Faktor 80 erhöht. Es handelt sich nun um 800.000 Zahlen.

Diese 80 Bilder werden nun weiterverarbeitet, indem man die "Local Binary Patterns" berechnet.

Dies geschieht in zwei Schritten. Zunächst wird eine Census-Transformation durchgeführt. Von dieser Census-Transformation gibt es verschiedene Varianten, in diesem Beispiel wird die einfachste Variante verwendet:

Jedes Pixel eines Bildes wird mit seinen 8 direkten Nachbarn verglichen. Ist der Wert des Nachbarpixels größer oder gleich, ist der Wert des Vergleichs 1, ist er kleiner, ist der Wert des Vergleichs 0. Damit bekommt man 8 Werte (jeweils 0 oder 1), die man zusammen als ein Byte anschreiben kann. Der Wert dieses Byte ist das Ergebnis der Census-Transformation.

Wir erhalten somit 80 Bilder mit jeweils 100x100 Pixeln, wobei sich der Wert jedes Pixels in einem Byte darstellen lässt. Durch die Census-Transformation bleibt die Informationsmenge gleich, es handelt sich also immer noch um 800.000 Zahlen.

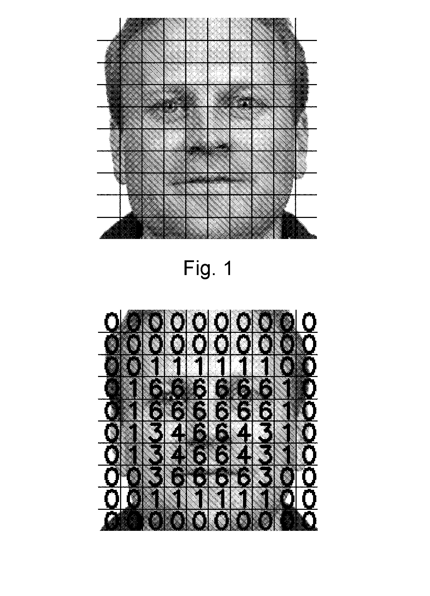

Im zweiten Schritt werden nun die Bilder in Teilbereiche unterteilt, in diesem Beispiel in 100 quadratische Bereiche, wobei jeder Bereich aus 10x10 Pixeln besteht (Fig. 1). Für jeden dieser Bereiche wird nun ein Histogramm erstellt, das angibt, wie oft jeder der 256 möglichen Werte in diesem Bereich vorkommt. (Da nur 100 Werte vorhanden sind, aber 256 mögliche Werte existieren, liefert das Histogramm zwangsläufig für die meisten möglichen Werte die Häufigkeit 0.) Jedes Histogramm lässt sich als Vektor mit 256 Komponenten darstellen.

Diese 100 Vektoren stellen die "Local Binary Patterns" dar. In Summe sind das also 8000 Vektoren mit jeweils 256 Komponenten.

Um das Verfahren weiter zu optimieren, werden aber nicht alle Bereiche gleich gewichtet: Merkmale wie Augen, Nase und Mund erhalten eine höhere Gewichtung als Bereiche der Wangen, des Kinns oder die Stirn. Eine mögliche Gewichtung ist in Fig. 2 dargestellt. Anzumerken ist, dass hier insgesamt 50 Bereiche (nämlich die Randbereiche) das Gewicht 0 erhalten, d.h. dass tatsächlich nur 4000 Histogramme mit jeweils 256 Werten berechnet werden müssen. Damit ergeben sich etwas mehr als eine Million Zahlen; durch die Berechnung der "Local Binary Patterns" wurde die Informationsmenge also nochmals vergrößert, wenn auch nur leicht.

Um diese Datenmenge nun kräftig zu reduzieren, wird die Hauptkomponentenanalyse (Principal Component Analysis) angewendet, und zwar für jeden Bereich unabhängig. Man fasst für jeden Teilbereich die Histogramme der 80 Bilder zu einem langen Vektor zusammen (er hat 80 mal 256 Komponenten, also 20480 Komponenten) und multipliziert ihn mit einer zuvor erstellten Matrix. Überraschenderweise kann man bei dieser Matrix mit rund 55 Zeilen auskommen (die Anzahl der Spalten ist natürlich gleich der Anzahl der Komponenten des Vektors, also 20480), sodass also aus dem Vektor mit über 20000 Komponenten ein Vektor mit rund 55 Komponenten entsteht, ohne dass man dabei viel Information verliert. Damit ergeben sich für 50 relevante Teilbereiche (d.h. für die Teilbereiche mit einem Gewicht ungleich 0) 2750 Zahlen, die sich leicht auf einer Chipkarte speichern lassen.

Wie man diese für die Hauptkomponentenanalyse notwendige Matrix erstellt, ist bekannt. Es werden von einer ausreichenden Anzahl von "Trainingsbildern" die 20480 Komponenten langen Vektoren berechnet. Von diesen Daten bildet man eine (quadratische, symmetrische) Matrix von Kovarianz-Werten, und von dieser Matrix berechnet man Eigenvektoren und Eigenwerte. Die Eigenvektoren bilden insgesamt wieder eine quadratische Matrix.

Multipliziert man einen Vektor (in diesem Fall mit 20480 Komponenten) mit der Matrix der Eigenvektoren, so handelt es sich dabei um eine Koordinatentransformation, die leicht rückgängig gemacht werden kann (indem man den neuen Vektor mit der inversen Matrix multipliziert). Der Trick der Hauptkomponentenanalyse besteht nun darin, dass man nur jene Eigenvektoren verwendet, deren Eigenwerte am größten sind, und dass man alle anderen Eigenvektoren weglässt (z.B. alle Eigenvektoren, deren Eigenwerte maximal 10% des größten Eigenwerts betragen). Im vorliegenden Fall wurde völlig überraschen gefunden, dass man mit rund 55 Eigenvektoren auskommen kann.

Auf den ersten Blick scheint es, als ob man hier die Eigenvektoren und Eigenwerte einer 20480x20480-Matrix berechnen müsste - ein ganz erheblicher Rechenaufwand, auch wenn er nur ein einziges Mal für jeden Teilbereich durchgeführt werden muss. (Besonders unsinnig ist dabei, dass ja der ganz überwiegende Großteil der Eigenvektoren, nämlich alle bis auf 55, dann wieder verworfen wird.) Es gibt aber eine Möglichkeit, bei der Berechnung der benötigten Matrizen erheblich Rechenzeit einzusparen.

Angenommen, man hat 100 Trainingsbilder mit jeweils einem Vektor von 20480 Komponenten. Dann kann man daraus eine Matrix 20480x100 bilden. Durch Transponieren erhält man eine Matrix 100x20480, und man kann eine 100x100-Kovarianzmatrix bilden. Von dieser lassen sich wesentlich leichter die Eigenvektoren und Eigenwerte berechnen. Behält man z.B. 55 Eigenvektoren, dann bleibt eine Matrix 100x55. Durch Multiplikation dieser Matrix mit der o.g. Matrix 20480x100 von links erhält man die für das Verfahren notwendige Matrix 20480x55.

Im Rahmen der vorliegenden Erfindung wurden viele verschiedene Kombinationen von Verfahrensschritten versucht, allerdings ist es mit keiner anderen Kombination als 1) Gabor-Filter, 2) "Local Binary Patterns" und 3) Hauptkomponentenanalyse gelungen, die Datenmenge auch nur annähernd so stark zu reduzieren, ohne einen inakzeptablen Informationsverlust hinnehmen zu müssen. Obwohl also all diese Verfahren im Prinzip bei der Bildverarbeitung bekannt sind, ist diese extreme Datenreduktion bei genau dieser Kombination bekannter Verfahren in keiner Weise vorhersehbar oder zu erwarten gewesen. Insbesondere liefert die Hauptkomponentenanalyse - wie bekannt unmittelbar auf Bilder angewendet - erheblich schlechtere Ergebnisse bezüglich Qualität der Gesichtserkennung, Rechenzeit und Speicherbedarf.

Da sich nun gemäß der vorliegenden Erfindung die Charakteristik eines Gesichts mit nur 2750 Zahlen darstellen lässt, ist es leicht möglich, eine Gesichtserkennung mit einem "Matching on chip"-Verfahren durchzuführen. Man speichert von einem oder mehreren Referenzbildern (drei Referenzbilder mit unterschiedlicher Mimik und/oder Beleuchtung sind sinnvoll) die 2750 Zahlen auf der Chipkarte ab. Bei der Autorisierung wird die entsprechende Person fotografiert und es werden wiederum die 2750 Zahlen berechnet und an die Chipkarte übermittelt. Diese 2750 Zahlen werden jeweils als Vektor aufgefasst und der euklidische Abstand berechnet. Man erhält so bezüglich jedes Referenzbildes einen Abstand, und wenn der Abstand bezüglich zumindest eines Referenzbildes ausreichend klein ist, wird die entsprechende Person autorisiert.

Bei der Ermittlung der Identität einer Person anhand eines Fotos und einer Fotokartei wird ganz ähnlich vorgegangen. Von jedem Foto der Fotokartei wird zunächst der entsprechende Vektor mit 2750 Komponenten berechnet und gespeichert. Dies muss nur einmal durchgeführt werden (sinnvollerweise gleich bei der Erstellung der Fotokartei). Von dem Foto, das man von der zu ermittelnden Person hat, ermittelt man ebenso den Vektor mit 2750 Komponenten, und danach überprüft man, bezüglich welcher der Fotos der Fotokartei dieser Vektor nur einen geringen Abstand hat. Diese Fotos wählt man dann für eine genauere Überprüfung (sei es händisch, sei es durch zuverlässigere, langsamere EDV-Verfahren) aus.

## Patentansprüche

1. Verfahren zur biometrischen Gesichtserkennung, wobei zunächst in einer Bildvorverarbeitung die Größe und die Position des Gesichts im Bild auf vorgegebene Werte gebracht werden; wonach mehrere Gabor-Filter angewendet werden, sodass eine entsprechende Zahl von Bildern entsteht; und wonach von diesen Bildern "Local Binary Patterns" berechnet werden, **dadurch gekennzeichnet, dass** zur Durchführung einer wenig speicherplatz- und rechenzeitintensiven Gesichtserkennung die "Local Binary Patterns" durch Hauptkomponentenanalyse (Principal Components Analysis) komprimiert werden und dass die so komprimierten Daten mit zuvor in gleicher Weise gebildeten Daten eines Referenzbildes oder mehrerer Referenzbilder verglichen werden.

2. Verfahren nach Anspruch 1, **dadurch gekennzeichnet, dass** zur Gesichtserkennung innerhalb einer Chipkarte die nach der Verarbeitung des Referenzbildes oder der Referenzbilder gemäß Anspruch 1 entstandenen Daten einmalig auf der Chipkarte gespeichert werden und durch ein in der Chipkarte ablaufendes Programm mit den entsprechenden Daten des aktuell verarbeiteten Bildes verglichen werden.

3. Verfahren nach Anspruch 2, **dadurch gekennzeichnet, dass** die Anwendung der Gabor-Filter und die Berechnung der "Local Binary Patterns" außerhalb der Chipkarte durchgeführt werden.

4. Verfahren nach Anspruch 1, **dadurch gekennzeichnet, dass** zur Identifizierung einer Person anhand eines Fotos der gesuchten Person und einer Fotokartei mit Fotos einer Vielzahl von Personen zunächst das Verfahren gemäß Anspruch 1 angewendet wird, um all diejenigen Personen auszuwählen, die eventuell in Frage kommen, und dass danach nur auf die ausgewählten Personen leistungsfähigere Verfahren angewendet werden.

5. Verfahren nach einem der Ansprüche 1 bis 4, **dadurch gekennzeichnet, dass** durch die Bildvorverarbeitung das Gesicht auf eine Größe von 100x100 Pixel gebracht wird.

6. Verfahren nach einem der Ansprüche 1 bis 5, **dadurch gekennzeichnet, dass** 80 Gabor-Filter angewendet werden.

7. Verfahren nach einem der Ansprüche 1 bis 6, **dadurch gekennzeichnet, dass** die Bilder zur Berechnung der "Local Binary Patterns" in Teilbereiche unterteilt werden und die Daten als Histogramm für jeden Teilbereich gespeichert werden, und dass die einzelnen Teilbereiche unterschiedlich gewichtet werden, bevor die Hauptkomponentenanalyse (Principal Component Analysis) angewendet wird.

8. Verfahren nach Anspruch 7, **dadurch gekennzeichnet, dass** zumindest ein Drittel der Bereiche mit Null gewichtet wird.

9. Verfahren nach einem der Ansprüche 1 bis 7, **dadurch gekennzeichnet, dass** die Matrix, die für die Hauptkomponentenanalyse (Principal Components Analysis) verwendet wird, für jeden Teilbereich unabhängig festgelegt ist.

Fig. 1

# EP 2 551 788 A1

**Europäisches Patentamt**
**European Patent Office**
**Office européen des brevets**

**EUROPÄISCHER RECHERCHENBERICHT**

**Nummer der Anmeldung**

EP 11 17 5945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HIEU V NGUYEN ET AL: "Local Gabor Binary Pattern Whitened PCA: A Novel Approach for Face Recognition from Single Image Per Person", 2. Juni 2009 (2009-06-02), ADVANCES IN BIOMETRICS, SPRINGER BERLIN HEIDELBERG, BERLIN, HEIDELBERG, PAGE(S) 269 - 278, XP019117936, ISBN: 978-3-642-01792-6 | 1-7,9 | INV. G06K9/00 |
| Y | * Abschnitt 2.1 - Abschnitt 3.4 * | 8 | |
| X | HANSUNG LEE ET AL: "Face Image Retrieval Using Sparse Representation Classifier with Gabor-LBP Histogram", 24. August 2010 (2010-08-24), INFORMATION SECURITY APPLICATIONS, SPRINGER BERLIN HEIDELBERG, BERLIN, HEIDELBERG, PAGE(S) 273 - 280, XP019159622, ISBN: 978-3-642-17954-9 | 1-6 | |
| Y | * Zusammenfassung * * Abbildungen 1-3 * * Abschnitt 4, Absatz 1 * | 7,8 | RECHERCHIERTE SACHGEBIETE (IPC) G06K |
| X | SHIGUANG SHAN ET AL: "Ensemble of Piecewise FDA Based on Spatial Histograms of Local (Gabor) Binary Patterns for Face Recognition", 18TH INTERNATIONAL CONFERENCE ON PATTERN RECOGNITION (ICPR'06), 1. Januar 2006 (2006-01-01), Seiten 606-609, XP55012411, DOI: 10.1109/ICPR.2006.494 ISBN: 978-0-76-952521-1 | 1-6,9 | |
| Y | * Zusammenfassung * * Abschnitt 3.1, Absatz 3 * * Abschnitt 3.2, letzter Absatz * * Abschnitt 3.3, Zeilen 7-9 * | 7,8 | |

-/--

Der vorliegende Recherchenbericht wurde für alle Patentansprüche erstellt

| Recherchenort | Abschlußdatum der Recherche | Prüfer |
|---|---|---|
| Den Haag | 18. November 2011 | Kollreider, Klaus |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 11 17 5945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TAO GAO ET AL: "A novel face description by local multi-channel Gabor histogram sequence binary pattern", AUDIO, LANGUAGE AND IMAGE PROCESSING, 2008. ICALIP 2008. INTERNATIONAL CONFERENCE ON, IEEE, PISCATAWAY, NJ, USA, 7. Juli 2008 (2008-07-07), Seiten 1240-1244, XP031298484, ISBN: 978-1-4244-1723-0 * Zusammenfassung * * Seite 1241, linke Spalte, Zeile 1 - Zeile 10 * * Abschnitt 4.2, Zeilen 3-4 * ----- | 1-6 | |
| A | ATSUSHI HIGASHI ET AL: "Local Gabor directional pattern histogram sequence (LGDPHS) for age and gender classification", STATISTICAL SIGNAL PROCESSING WORKSHOP (SSP), 2011 IEEE, IEEE, 28. Juni 2011 (2011-06-28), Seiten 505-508, XP031908034, DOI: 10.1109/SSP.2011.5967744 ISBN: 978-1-4577-0569-4 * Zusammenfassung; Abbildung 1 * * Abbildung 1 * * Abschnitt 3.2, Zeilen 2-5 * ----- | 1 | RECHERCHIERTE SACHGEBIETE (IPC) |

-/--

Der vorliegende Recherchenbericht wurde für alle Patentansprüche erstellt

| Recherchenort | Abschlußdatum der Recherche | Prüfer |
|---|---|---|
| Den Haag | 18. November 2011 | Kollreider, Klaus |

EPO FORM 1503 03.82 (P04C03)

| | Europäisches Patentamt |
|---|---|
| | European Patent Office |
| | Office européen des brevets |

**EUROPÄISCHER RECHERCHENBERICHT**

**Nummer der Anmeldung**

EP 11 17 5945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | PILLER ERNST: "Biometrische Benutzerauthentifizierung durch Chipkarten mit einem Gesichtserkennungs-Matching-on-card", TAGUNGSBAND DER SECURITY KONFERENZ 2009 : 7. INFORMATION SECURITY KONFERENZ ; 29. OKTOBER 2009, KREMS; [BOOKS@OCG.AT], WIEN : ÖSTERR. COMPUTER GES, AT, 29. Oktober 2009 (2009-10-29), Seiten 119-134, XP008145308, ISBN: 978-3-85403-257-1 * Seite 123, letzter Absatz - Seite 124, Absatz 1 * * Abschnitt 3, Zeilen 1-22;Abbildung 1 * * Seite 126, Absatz 1 * * Seite 127, letzter Absatz; Abbildung 3 * ----- | 2,3 | |
| A | H-K Jee ET AL: "Integrating the Face Verification Algorithm into the Smart Card System", Electronics and Telecommunication Research Institute, 1. Januar 2001 (2001-01-01), Seiten 1-5, XP55012467, Daejeon Gefunden im Internet: URL:http://www.wseas.us/e-library/conferences/brazil2002/papers/448-142.pdf [gefunden am 2011-11-17] * Zusammenfassung * * Abschnitt 3 * ----- -/-- | 2,3 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 18. November 2011 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 11 17 5945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BOURLAI T ET AL: "Face verification system architecture using smart cards", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, Bd. 1, 23. August 2004 (2004-08-23), Seiten 793-796, XP010724469, DOI: 10.1109/ICPR.2004.1334336 ISBN: 978-0-7695-2128-2 * Zusammenfassung * * Abschnitt 2, vorletzter Absatz * ----- | 2,3 | |
| T | ROSS ARUN A ET AL: "Handbook of Multibiometrics, Passage", 1. Januar 2006 (2006-01-01), HANDBOOK OF MULTIBIOMETRICS; [INTERNATIONAL SERIES ON BIOMETRICS], NEW YORK : SPRING SCIENCE BUSINESS, US, PAGE(S) 52 - 53,56, XP002584309, ISBN: 978-0-387-22296-7 * Abschnitt 2.5.2 * ----- | | |
| | | | RECHERCHIERTE SACHGEBIETE (IPC) |
| Y | WENCHAO ZHANG ET AL: "Local Gabor Binary Pattern Histogram Sequence (LGBPHS): A Novel Non-Statistical Model for Face Representation and Recognition", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, LOS ALAMITOS, CA, USA, Bd. 1, 17. Oktober 2005 (2005-10-17), Seiten 786-791, XP010854868, DOI: 10.1109/ICCV.2005.147 ISBN: 978-0-7695-2334-7 * Abschnitt 3.2 * * Abschnitt 4.2 * ----- -/-- | 7,8 | |

Der vorliegende Recherchenbericht wurde für alle Patentansprüche erstellt

| Recherchenort | Abschlußdatum der Recherche | Prüfer |
|---|---|---|
| Den Haag | 18. November 2011 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 11 17 5945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WENCHAO ZHANG ET AL: "Are Gabor phases really useless for face recognition?", PATTERN ANALYSIS AND APPLICATIONS, SPRINGER-VERLAG, LO, Bd. 12, Nr. 3, 14. Mai 2008 (2008-05-14), Seiten 301-307, XP019724432, ISSN: 1433-755X * das ganze Dokument * ----- | 1 | |
| T | C Bergman: "Match-on-Card for Secure and Scalable Biometric Authentication" In: N Ratha et al (Eds.): "Advances in Biometrics", 2008, Springer Verlag, London, GB, XP002663885, ISBN: 978-1-84628-920-0 Seiten 407-421, * Seite 412, Zeile 1 - Zeile 9 * * Abschnitt 21.6 * ----- | | |
| T | H Wechsler: "Reliable Face Recognition Methods: System Design, Implementation and Evaluation", 2007, Springer Science Business, New York, US, XP002663886, ISBN: 978-0-387-22372-8 Seiten 110-115, * Abschnitt 6.5 Recognition by Parts * ----- | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 18. November 2011 | Kollreider, Klaus |

EPO FORM 1503 03.82 (P04C03)